# EUROPEAN PATENT APPLICATION

(11) **EP 1 338 949 A2**
(43) Date of publication of application: **27.08.2003**
(21) Application number: 03001396.5
(22) Date of filing: 27.01.2003
(51) Int. Cl.: G06F 3/033

(54) **Information processing apparatus**

(30) Priority: 22.02.2002 JP 2002047220
(71) Applicant: Kabushiki Kaisha Toshiba, Tokyo (JP)
(72) Inventor: Numano, Fujihito, Kabushiki Kaisha Toshiba, Minato-ku, Tokyo 105-8001 (JP)
(74) Representative: Henkel, Feiler, Hänzel

(57) **Abstract**

When a touch pad pointing device (112) is tapped, the tapped position coordinates are detected and a setup function or other operation is performed if the detected coordinates are registered in the setup table (301). If the detected coordinates are not registered in the setup table (301), a mouse pointing function is performed. When a middle user selectable operator (113c) is pressed, a mouse pointer motion speed setup screen is displayed on a sub display (112b) of the touch pad pointing device (112). By moving a slide bar displayed on the mouse pointer motion speed setup screen, a user may easily change the pointer motion speed on the sub display (112b).

## Description

The present invention relates to an information processing apparatus such as a portable personal computer equipped with, e.g., a touch pad pointing device.

In recent years, various notebook or laptop portable personal computers have been developed. These types of portable personal computers are provided with various functions in order to assure improvement of the functionality.

An example of these functions is a pointing device for the portable computer as a replacement for a mouse. For example, the touch pad pointing device disclosed in Jpn. Pat. Appln. KOKAI Publication No. 8-44493 is widely used as one such type of pointing device. It is possible to give various commands to the computer by tapping tap zones on this touch pad. For example, the computer can be provided with commands for changing the speed of the mouse pointer indicated on a computer display device, defining the setup of above-mentioned tap zones, etc.

A conventional utility for changing the mouse pointer speed is activated from the pointing device. In order to set the mouse pointer speed, a user calls a mouse setup screen, displays a pointer speed setup screen, and operates a slide bar on the screen. When the mouse pointer has been set to the slowest speed, however, the user needs to perform the whole operation using the slowest mouse pointer, degrading the functionality.

Conventionally, the user needs to display a tap zone confirmation screen in the display screen on the display device each time he or she wishes to confirm the defined tap zone function. Thus, it has been difficult to confirm the defined function.

The prior art requires much time and labor for various settings and operations on the computer's setup and operation screens, detrimentally affecting the functionality and workability of the computer.

Embodiments of the present invention provide an information processing apparatus capable of facilitating various settings and operations on the setup and operation screens.

According to an embodiment of the present invention, an information processing apparatus comprises a main display, a sub display, and a processor programmed for displaying, on the sub display, at least one of a symbol of an operation and a setup screen for adjusting parameters to be reflected on at least one of the main display and the sub display.

This summary of the invention does not necessarily describe all necessary features so that the invention may also be a sub-combination of these described features.

The invention can be more fully understood from the following detailed description when taken in conjunction with the accompanying drawings, in which:
FIG. 1 is a perspective view showing an external configuration of a personal computer according to an embodiment of the present invention;
FIG. 2 is a block diagram showing a hardware configuration of the personal computer according to the embodiment;
FIG. 3 is a functional block diagram showing a main part of the embodiment;
FIG. 4 shows a configuration example of a setup table;
FIG. 5 is a flowchart showing a control program procedure;
FIGS. 6A, 6B, and 6C illustrate mouse pointer speed setup screens on a pointing device according to a mouse setup function;
FIG. 7 exemplifies a function confirmation screen for tap zones on the pointing device;
FIG. 8 illustrates operations to switch displays for pointing device functions;
FIGS. 9A and 9B illustrate a pointing device used as a display accessory function and shows icons representing tap zone functions;
FIGS. 10A and 10B illustrate customization examples of the pointing device for different users; and
FIG. 11 exemplifies a properties setup screen on a main display.

An embodiment of an information processing apparatus according to the present invention will now be described with reference to the accompanying drawings.

The following describes an embodiment of a personal computer having not only a display device (main device) for displaying text, graphics, a mouse pointer, etc., but also a display-equipped pointing device integrally comprising a display panel (sub display) such as an LCD and a touch pad. The display panel of this pointing device enables a user to display and manipulate various setup and operation screens. Examples of setup and operation screens include, but are not limited to, a setup screen for setting a motion speed of a pointer displayed on the main display, a numeric keypad, a calculator, a text input screen and the like. One example of a display-equipped pointing device that is available is the cPad™ by Synaptics, Inc., 2381 Bering Dr., San Jose, CA 95131. (see http://www.synaptics.com/products/cpad.cfm).

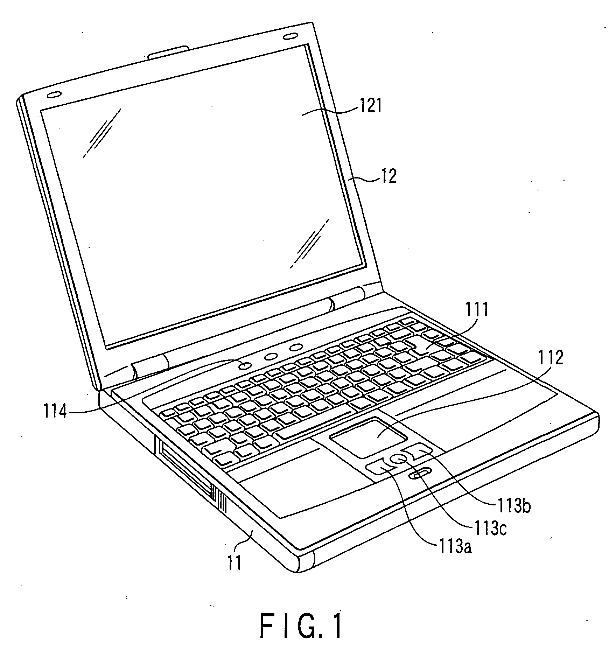

FIG. 1 is a perspective view showing an external configuration of an information processing apparatus according to embodiments of the present invention. FIG. 1 shows an exemplary notebook personal computer in which embodiments of the present invention may be incorporated.

As shown in FIG. 1, the computer according to embodiments of the present invention comprises a computer body 11 and a display unit 12. The display unit 12 includes a display screen (main display) 121 comprising an LCD. The display unit 12 is freely rotatively mounted on the computer body 11 between opened and closed positions. The computer body 11 is formed like a thin box case. A keyboard 111 is arranged on the top surface of the case. An armrest is formed on this top surface between the keyboard 111 and the front end of the case. Almost at the center of the armrest, a display-equipped, touch pad pointing device 112 is arranged together with a left user selectable operator 113a, a right user selectable operator 113b, and a middle user selectable operator 113c that are included in the device 112. The device 112 also works as a sub display.

Further, on the top surface of the computer body 11, there is provided a power user selectable operator 114 to turn on or off the computer body 11.

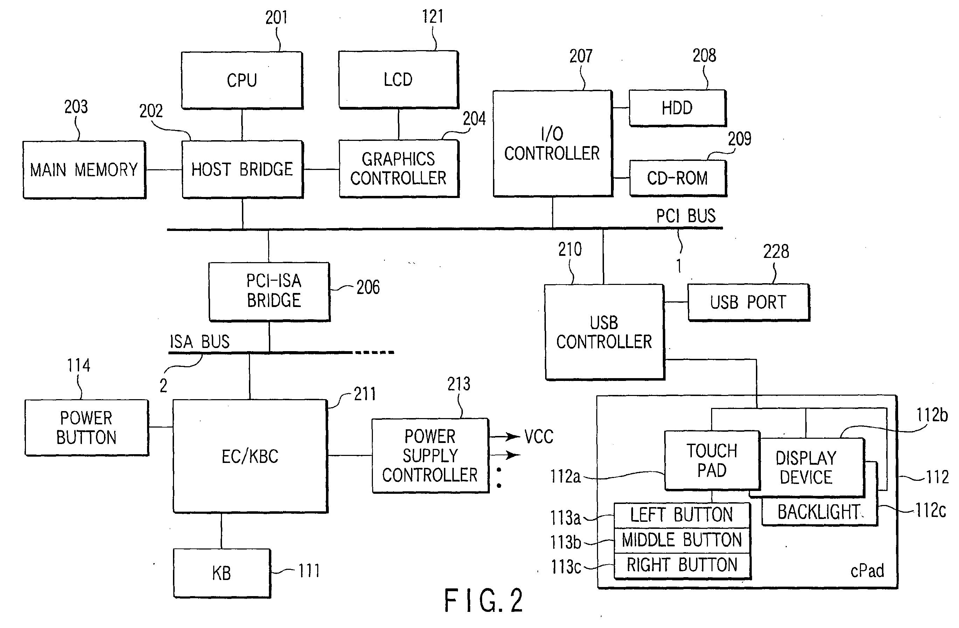

FIG. 2 is a block diagram showing an exemplary system configuration of the computer illustrated in FIG. 1. As shown in FIG. 2, the computer comprises a CPU 201, a host bridge 202, a main memory 203, a graphics controller 204, a PCI-ISA (Peripheral Component Interconnect-Industry Standard Architecture) bridge 206, an I/O (Input/Output) controller 207, a hard disk drive (HDD) 208, a CD-ROM (Compact Disk-Read Only Memory) drive 209, a USB (Universal Serial Bus) controller 210, an embedded controller and keyboard controller IC (EC/KBC) 211, and a power supply controller 213, and the like.

The pointing device 112 and a USB port 228 are connected to the USB controller 210. The pointing device 112 integrally comprises a touch pad 112a, a display device 112b, and a backlight 112c, and includes the left user selectable operator 113a, the right user selectable operator 113b, and the middle user selectable operator 113c.

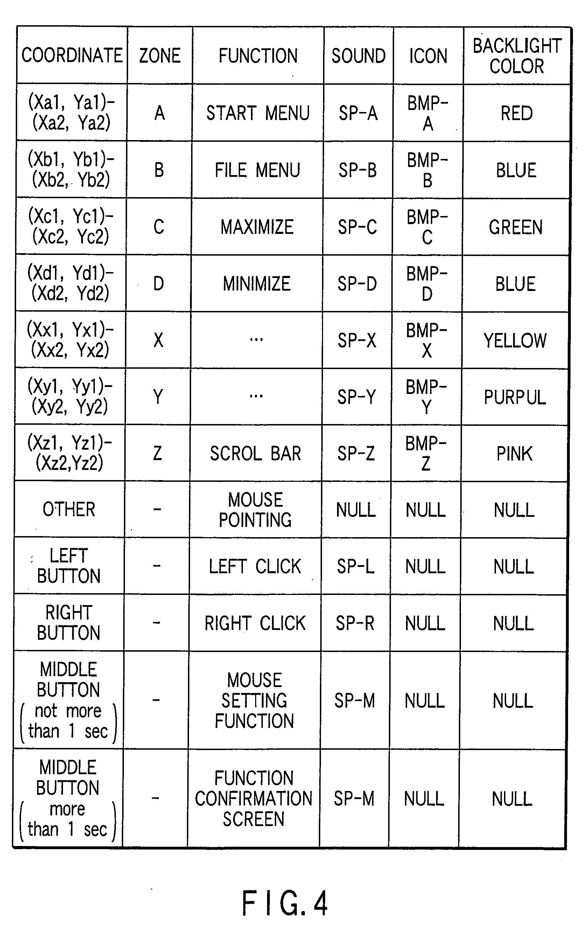

The CPU 201 controls computer operations and executes an operating system, application programs, utility programs and the like which are loaded into the main memory 203 from the hard disk drive 208. The embodiment of the invention shown in FIG. 2 may execute programs shown in FIG. 4. Processing of these programs in FIG. 4 will be described later.

The host bridge 202 is a bridge device to make bidirectional connection between a local bus (not shown) of the CPU 201 and a PCI bus 1. The graphics controller 204 controls a main display (Liquid Crystal Display) 121 used as a display monitor for the computer. The I/O controller 207 controls the hard disk drive 208, the CD-ROM drive 209, and the like. The PCI-ISA bridge 206 is a bridge device to make bidirectional connection between the PCI bus 1 and an ISA bus 2. In this example, the PCI-ISA bridge 206 includes various system devices such as a system timer, a DMA controller, an interrupt controller, and the like.

The embedded controller and keyboard controller IC (EC/KBC) 211 is a one-chip microcomputer integrating an embedded controller (EC) for power management and a keyboard controller (KBC) for controlling the keyboard 111. The embedded controller and keyboard controller IC (EC/KBC) 211 turns on or off the computer in cooperation with the power supply controller 213 in response to user operation of the power user selectable operator 114.

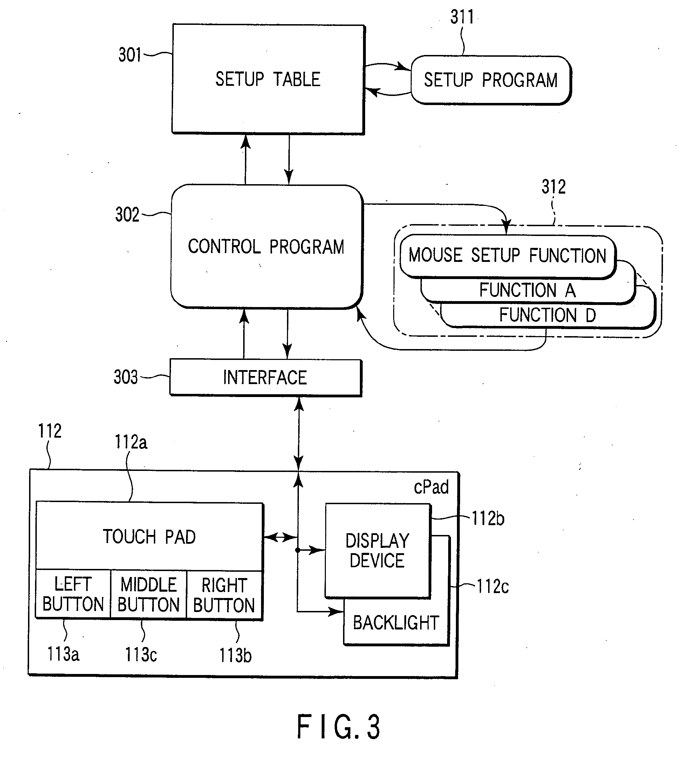

FIG. 3 is a block diagram showing components of the computer shown in FIG. 1, according to embodiments of the present invention. The components include a setup table 301 for setting up functions of the pointing device 112; a control program 302 for controlling functions of the pointing device 112 according to contents of the setup table 301; an interface 303 for controlling input and output of information interchanged between the pointing device 112 and the control program 302; a setup program 311 for configuring the setup table 301 based on a GUI; an execution module 312 for executing a mouse setup function and functions A through Z in accordance with commands from the control program 302 and the pointing device 112.

FIG. 4 shows an exemplary configuration of the setup table 301. The exemplary table shown in FIG. 4 may be used for, for example, setting sounds, icons (bit map images), and backlight colors for setup areas such as the tap zone, a scroll bar zone, etc., and the remaining zone (the mouse pointing zone). Functions and sounds may also be configured for the left user selectable operator 113a, the right user selectable operator 113b, and the middle user selectable operator 113c.

The first column of the table shown in FIG. 4 may be used to indicate a specific zone of the pointing device 112 by its display screen coordinates. The first column may also be used to indicate a specific operator, for example left user selectable operator 113a, right user selectable operator 113b, or middle user selectable operator 113c.

The second column of the table shown in FIG. 4 may be used to provide a designator for a zone consisting of particular coordinates. For example, in the table shown in FIG. 4 the display screen coordinates (Xa1, Ya1)-(Xa2, Ya2) in column 1 are designated as zone A in column 2, while the display screen coordinates (Xb1, Yb1) - (Xb2, Yb2) are designated as zone B.

The third column of the table shown in FIG. 4 may be used to designate a function to be performed (for example, "START MENU") in response to an operation performed in the associated zone (for example, tapping in the zone). The third column of the table shown in FIG. 4 may also be used to designate a function (for example, "MOUSE SETTING FUNCTION") to be performed in response to an operation of an associated operator (for example the operation by a user of left user selectable operator 113a, right user selectable operator 113b, and/or middle user selectable operator 113c).

The fourth column of the table shown in FIG. 4 may be used to designate a particular sound to be played when an operation occurs in the associated zone or when an associated operator is operated by the user. The fifth column may be used to designate a particular icon or other symbol to be associated with a particular zone of the pointing device 112. Finally, the sixth column of the table may be used to designate a particular backlight color to be associated with a particular zone of the pointing device 112.

A user can freely configure the setup table 301 using the GUI function by executing the setup program 311. The setup table 301 is customizable for each user.

In this example embodiment, the mouse pointing zone corresponds to a zone not configured in the setup table 301, i.e., the mouse pointing zone consists of that portion of the pointing device 112 other than the tap zone portion, which may be configured in the setup table 301. It is also possible to freely specify sounds and the like for the mouse pointing zone. A user can easily identify the most recently setup mouse pointing functions and other functions on the pointing device 112. This enables smooth input/output operations for the pointing device 112. The zone not defined in the setup table 301 uniquely works as the mouse pointing zone, facilitating configuration of the setup table 301 and improving the usability. Since sounds can be defined for user selectable operator operations, the user can audibly confirm user selectable operator operations.

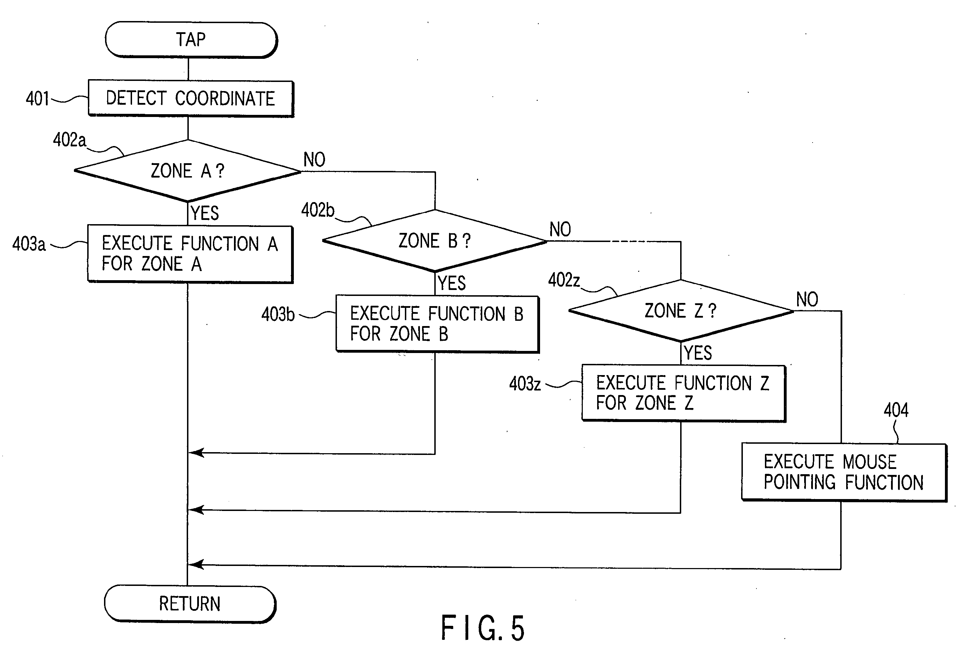

FIG. 5 is a flowchart showing a procedure of the control program 302 according to embodiments of the present invention. The program is executed in accordance with tapping on the pointing device 112. When the pointing device 112 is tapped, the control program 302 recognizes the tapped coordinate (step 401). If the coordinate is within value zones specified in the setup table 301 (YES at steps 402a through 402z), the program executes functions for the zones specified in the setup table 301 (steps 403a through 403z). If the coordinate is outside the specified value zones, the program executes the mouse pointing function (step 404).

In this manner, the functions defined in the setup table 301 are executed when the tapped coordinate is within the zones specified in the setup table 301. The pointing function is simply executed like a conventional mouse when the tapped coordinate is outside the zones specified in the setup table 301.

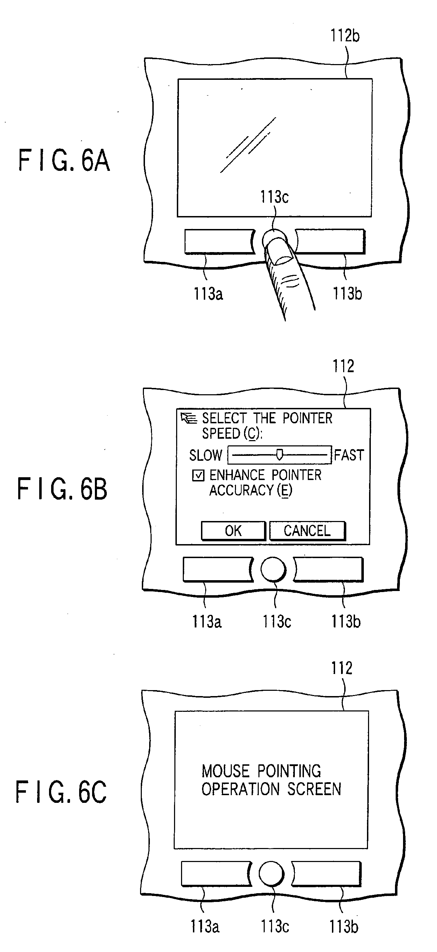

FIGS. 6A through 11 illustrate the display function and exemplary applications for the pointing device 112 according to embodiments of the present invention. The display function may be used to set particular parameters that will then be reflected on either the main display 121 or the sub display 112.

As an example, FIGS. 6A through 6C illustrate setup operations using a mouse pointer speed setup screen on the display screen of the pointing device 112. Pressing or otherwise selecting the middle user selectable operator 113c activates a mouse setup function (FIG. 6A). The pointing device screen indicates a mouse pointer speed setup screen including a slide bar for varying the speed (FIG. 6B). A user can operate the slide bar directly with his or her finger on the display screen of the pointing device 112 and complete the operation by pressing or otherwise selecting the OK user selectable operator (FIG. 6C). In this manner, it is possible to freely adjust the speed of the mouse pointer displayed on the main display 121. Since the pointing device setup screen can be manipulated by directly tapping on the screen, not by using the mouse cursor, a smooth setup operation is possible independently of the currently set mouse speed.

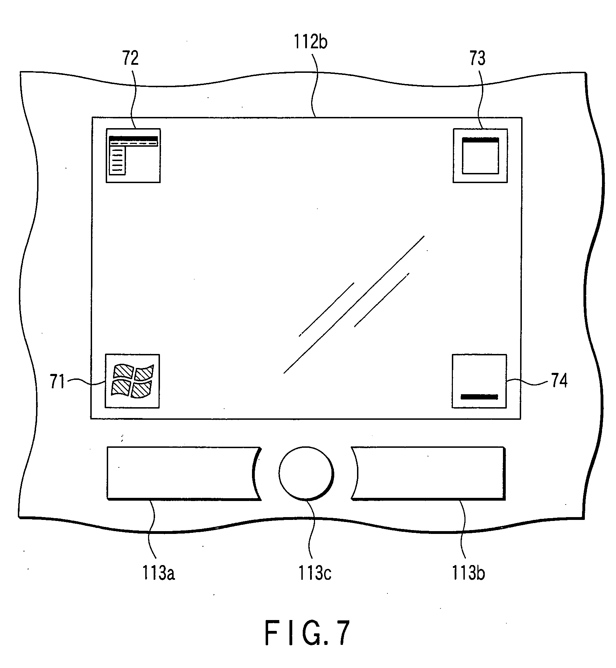

FIG. 7 illustrates a screen for confirming the tap zone function setting on the pointing device 112 according to embodiments of the present invention. The screen shows icons (i.e. symbols), each of which corresponds to a tap zone specified in the setup table 301. The symbols represent functions (operations) which are also specified in the setup table 301. For example, in one embodiment the functions assigned to the icons may be start menu display for zone 71 (zone A in FIG. 4); file menu display for zone 72 (zone B in FIG. 4); maximization for zone 73 (zone C in FIG. 4); and minimization for zone 74 (zone D in FIG. 4). Since the tap zone functions are displayed on the sub display of the pointing device 112, the user can easily confirm the predetermined functions, improving the functionality.

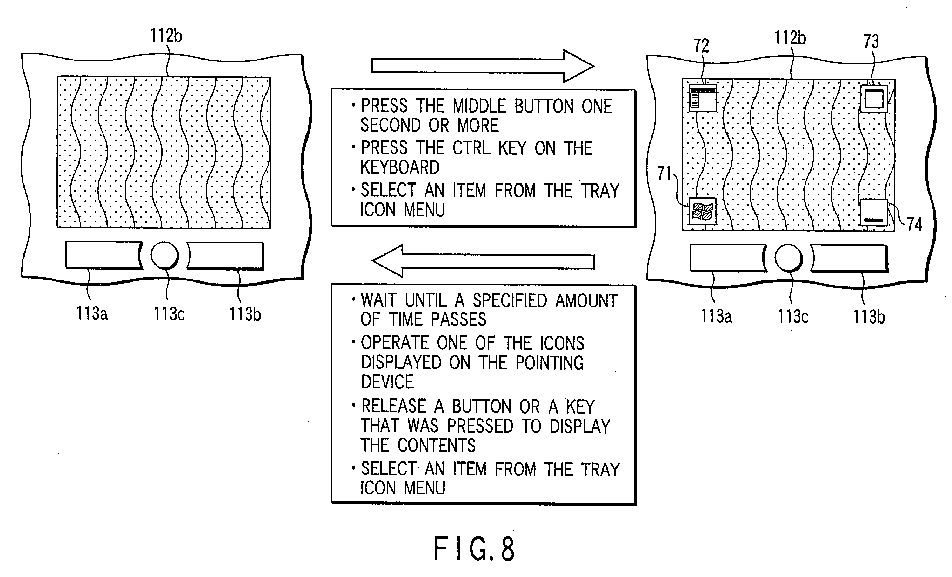

A user may not require this function confirmation screen to be displayed. Thus, according to embodiments of the present invention, the confirmation screen may be displayed temporarily in response to a given trigger, examples of which are shown in FIG. 8.

FIG. 8 illustrates exemplary operations for changing displays on the pointing device 112. The pointing device 112 may be used as a display accessory function. According to one embodiment, the display device 112b of the pointing device 112 normally indicates a design image (for example, wallpaper) as shown on the left of FIG. 8. As shown in FIGS. 7 and 8, the display shows the icons (symbols) at the tap zones defined in the setup table 301 (FIGS. 3 and 4) on the design image.

In this example embodiment, the confirmation screen (shown on the right of FIG. 8) appears as a result of a specified operation by a user. As shown in FIG. 8, the specified operation for causing the confirmation screen to appear may be, for example, (1) pressing or otherwise selecting the middle user selectable operator 113c for one second or longer, (2) pressing or otherwise selecting the control key on the keyboard or (3) selecting an item form the tray icon menu.

According to the present example embodiment, the confirmation screen disappears and returns to an original state (i.e., the icons at the tap zones disappear and the display returns to just the original design image as shown on the left of FIG. 8) or momentarily changes to another display for a specified amount of time (1) after the user performs a specified operation using an input device such as the pointing device 112, the keyboard 111, or a mouse (not shown), (for example, after the user releases a user selectable operator or a key on the keyboard that was pressed or otherwise selected to display the confirmation screen) (2) when the user operates one of the icons displayed on the pointing device 112, (3) after a specified amount of time passes without operating the input device or (4) when a specified icon is selected from the tray icon menu. The exemplary embodiment shown in FIG. 8 simultaneously shows the function notification icons at all tap zones defined in the setup table 301. However, in other embodiments it is also possible to use just some of these tap zones defined in the setup table 301 to selectively display function notification icons effective or necessary for specific system operations.

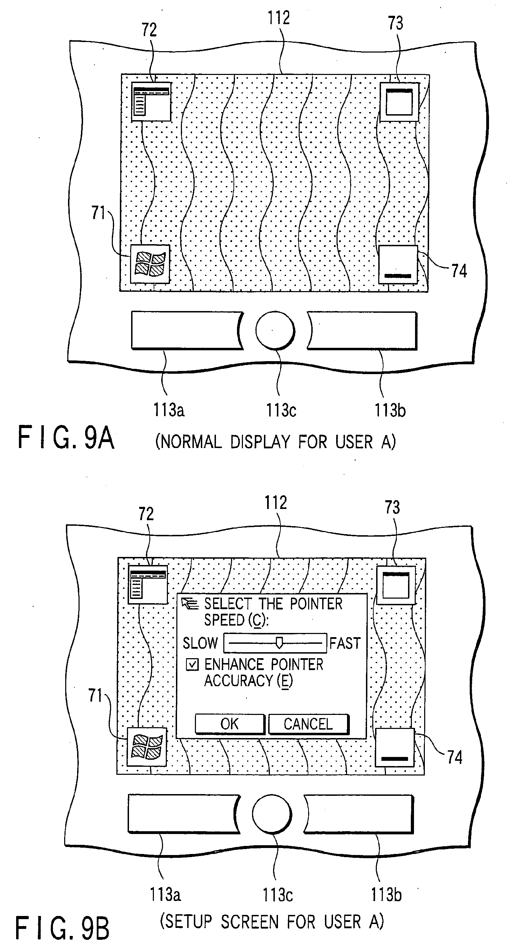

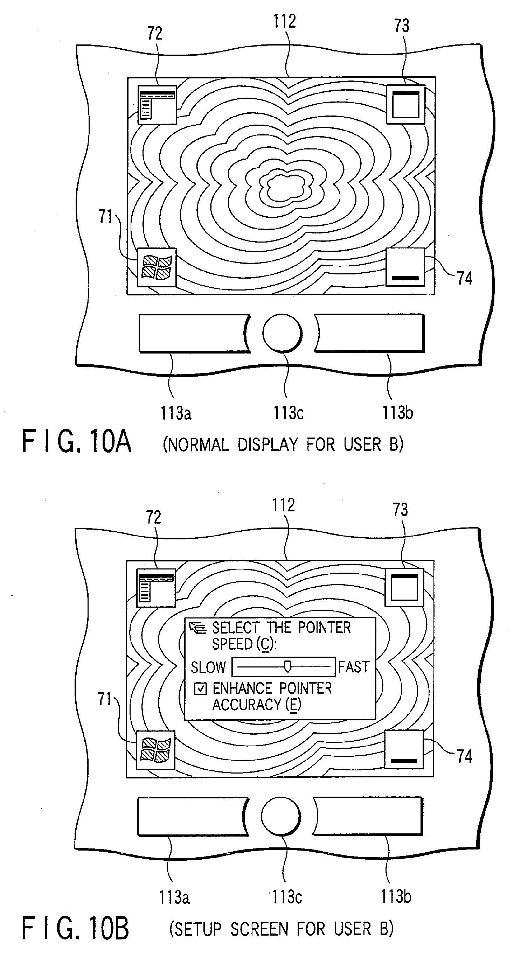

FIGS. 9A through 10B illustrate examples of displaying setup images for specified users on the pointing device 112 when the setup table 301 is created for different users. FIGS. 9A and 10A show the pointing device 112 used as a display accessory function and shows icons representing tap zone functions. FIGS. 9B and 10B show a mouse pointer speed setup screen displayed on the sub display 112b of the touch pad pointing device 112. Thus, since specific design images and icons can be defined for individual users, it is possible to identify a user from the design image displayed on the pointing device 112.

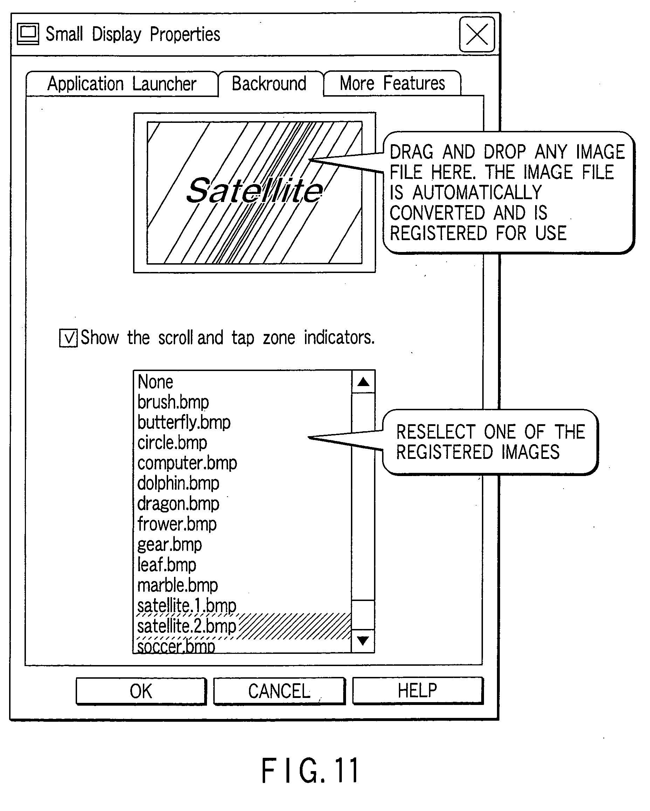

FIG. 11 shows an exemplary sub display properties setup screen (main display) for setting up a design image. This example shows how to select an arbitrary image from a setup screen displayed on the main display 121 by moving the mouse pointer by means of the pointing device 112 or any other input device. When there are a few images to be selected, the pointing device 112 can be used to select images to be displayed on the pointing device 112. Using this setup screen, each user can reselect a desired image from the pre-registered images or fetch and apply any of the image files.

Specific exemplary operations of embodiments of the present invention will now be described below.

When the user wishes to change a mouse pointer speed for a mouse pointer displayed on the main display 121, the user presses or otherwise selects the middle user selectable operator 113c (FIG. 6A). A mouse pointer speed setup screen is displayed on the sub display 112b of the touch pad pointing device 112 (FIG. 6B). The user can operate the slide bar directly with his or her finger on the display screen of the pointing device 112 and complete the operation by pressing or otherwise selecting the OK user selectable operator (FIG. 6C).

In this manner, it is possible to freely adjust the speed of the mouse pointer displayed on the main display 121 by a simple operation on the display screen of the pointing device 112. The mouse pointer speed setup function is realized by starting a mouse setup function included in the execution module 312 by a procedure of the control program 302 as shown in FIG. 5.

When the user wishes to confirm the tap zone function setting on the pointing device 112, the user presses or otherwise selects the middle user selectable operator 113c for one second or longer, presses or otherwise selects the Ctrl key on the keyboard 111, or manipulates a specified icon from a tray icon menu, thereby displaying the icons at the tap zones defined in the setup table 301 as shown in FIGS. 7, 9A, 9B, 10A, and 10B. Thus, the user can easily confirm the predetermined functions, improving the functionality.

In addition to the above described triggers, in some embodiments there are other triggers for displaying the symbols representing the tap zone functions. For example, it is possible to display the icons as shown in FIGS. 7, 9A, 9B, 10A, and 10B when the tap zone on the pointing device 112 registered in the setup table 301 is tapped, a display of a symbol of the tap zone function is selected by another input device, a tapping of a tap zone is enabled by a system operation, or a tapping of a tap zone is required by a system operation. In addition, according to some embodiments, it is possible to display only some of these tap zones, i.e., those which are effective or necessary for specific system operations.

According to embodiments of the present invention, there are many other possible ways of changing the display. For example, the tapping screen may indicate a tap position and a function symbol which are registered in the setup table 301 when a specific operation is performed by the pointing device 112 or other input devices. In addition, when the user taps the tapping screen, the display may be changed to another screen in accordance with the contents of tapping. Furthermore, when the user taps the tapping screen, the display may be temporary changed to another screen. Also, a predetermined setup screen may disappear and the original screen may return after a specified amount of time passes without operating the input device.

As discussed above, because embodiments of the present invention provide a display changeover function, it is possible to display a confirmation screen only when it is necessary. When it is not necessary, the tap zone function confirmation screen may be dismissed. Therefore, other useful screens can be displayed on the sub display 112b of the pointing device 112.

In addition, as discussed above, a screen of the sub display 112b of the pointing device 112 may be customized. For example, different design images and icons (symbols) may be freely set for different users so that it is possible to identify a user from the design image displayed on the pointing device 112.

As mentioned above, embodiments of the present invention enable quick confirmation of the tap zone functions through simple operations on the pointing device 112 without the complicated operations required with conventional technology.

The above-mentioned function of changing displays for the pointing device 112 makes it possible to display the setup information on the pointing device 112 only when needed. When such information is not necessary, the unnecessary display may be terminated and other necessary functions may be activated instead, allowing for smooth input/output operations by effectively using the display function of the pointing device 112. In addition, screens displayed on the pointing device 112 may be freely customized for users.

By providing various functions using the above-mentioned pointing device 112, it is possible to quickly, easily, smoothly, and efficiently complete various settings and operations on the setup screen and the operation screen. Even if it is difficult to operate the pointing device, for example, the pointing device may be easily and quickly reconfigured. Since the display screen of the pointing device displays the contents of the pointing device configuration, the user can easily recognize that the displayed information relates to the pointing device and can easily and quickly perform the configuration.

In addition to the above-mentioned embodiments, the display function of the pointing device 112 may be applied to various operations and setup functions such as manipulating scroll bars, creating or changing image designs displayed on the pointing device 112, and the like. While the embodiment uses cPad™ from Synaptics, Inc. as a display-equipped pointing device, the present invention is not limited thereto, and other display-equipped pointing devices can be applied. Moreover, the present invention is not limited to the table configuration, screen configurations, setup functions, and the like as described in embodiments herein but may be otherwise variously embodied in accordance with system functions, specifications, and the like.

As mentioned above in detail, the present invention can provide a method for easily completing various settings and operations on the setup screen and the operation screen so as to enhance functions for operating an information processing apparatus such as a computer.

While the description above refers to particular embodiments of the present invention, it will be understood that many modifications may be made without departing from the spirit thereof. The accompanying claims are intended to cover such modifications as would fall within the true scope and spirit of the present invention. The presently disclosed embodiments are therefore to be considered in all respects as illustrative and not restrictive, the scope of the invention being indicated by the appended claims, rather than the foregoing description, and all changes that come within the meaning and range of equivalency of the claims are therefore intended to be embraced therein. For example, the present invention can be practiced as a computer readable recording medium in which a program for allowing the computer to function as predetermined means, allowing the computer to realize a predetermined function, or allowing the computer to conduct predetermined means.

## Claims

1. An information processing apparatus comprising:
a main display (12); and
a sub display (112b), **characterized by** further comprising:
a processor (201) programmed for displaying, on the sub display (112b), at least one of a symbol of an operation and a setup screen for adjusting parameters to be reflected on at least one of the main display (12) and the sub display (112b).

2. The information processing apparatus recited in claim 1, **characterized by** further comprising a touch pad pointing device (112).

3. The information processing apparatus recited in claim 2, **characterized in that** the touch pad pointing device (112) is integral with the sub display (112b).

4. The information processing apparatus recited in claim 3, **characterized in that** the touch pad pointing device (112) comprises a unit (112a) for entering position coordinates, a display panel (112b), a backlight (112c), and a plurality of user selectable operators (113a, 113b, 113c).

5. The information processing apparatus recited in claim 2, **characterized in that** the processor (201) is further programmed for temporarily changing contents displayed on the sub display (112b) in response to a specified operation.

6. The information processing apparatus recited in claim 5, **characterized in that** the specified operation is performed using the touch pad.pointing device (112).

7. The information processing apparatus recited in claim 1, **characterized in that** the processor (201) is further programmed for displaying a properties editing screen for at least one of selecting properties of the sub display (112b) and editing properties of the sub display (112b).

8. The information processing apparatus recited in claim 7, **characterized in that** the properties editing screen is used for selecting a design for display on the sub display (112b).

9. The information processing apparatus recited in claim 1, **characterized in that** the sub display (112b) displays an operation screen indicating at least one of a tap zone, a scroll bar, a numeric keypad, a calculator, and a text input screen.

10. The information processing apparatus recited in claim 1, **characterized in that** the parameters include a motion speed of a pointer displayed on the main display (12).

11. The information processing apparatus recited in claim 10, **characterized in that** the motion speed is adjusted using the touch pad pointing device (112).

12. The information processing apparatus recited in claim 1, **characterized in that** the touch pad pointing device (112) is provided on an armrest of the information processing apparatus.

13. A method of expanding functionality of a information processing apparatus having a main display (12), the method **characterized by** comprising:
providing a sub display (112b); and
displaying on the sub display (112b) at least one of a symbol of an operation and a setup screen for setting parameters to be reflected on at least one of the main display (12) and the sub display (112b).

14. The method recited in claim 13, **characterized by** further comprising providing a touch pad pointing device (112) for setting the parameters.

15. The method recited in claim 14, **characterized in that** the touch pad pointing device (112) is integral with the sub display (112b).

16. The method recited in claim 14, **characterized in that** the parameters include a motion speed of a pointer displayed on the main display (12).
